# EUROPÄISCHE PATENTSCHRIFT

(11) **EP 1 094 914 B1**
(45) Veröffentlichungstag und Bekanntmachung des Hinweises auf die Patenterteilung: **24.09.2003**
(21) Anmeldenummer: 99932782.8
(22) Anmeldetag: 01.07.1999
(51) Int. Cl.: B23K 20/12

(54) **VERFAHREN ZUM VERBINDEN METALLISCHER TEILE**
METHOD FOR CONNECTING METAL PARTS
PROCEDE PERMETTANT D'ASSEMBLER DES PIECES METALLIQUES

(30) Priorität: 08.07.1998 DE 19830550
(43) Veröffentlichungstag der Anmeldung: 02.05.2001
(73) Patentinhaber: Framatome ANP GmbH, 91050 Erlangen (DE)
(72) Erfinder: PELLKOFER, Dieter, D-91074 Herzogenaurach (DE); ENGELHARD, Gerhard, D-91058 Erlangen (DE)
(74) Vertreter: Mörtel & Höfner
(86) Internationale Anmeldenummer: EP9904571
(87) Internationale Veröffentlichungsnummer: WO00002698

(56) Entgegenhaltungen:
- EP-A- 0 460 901
- EP-A- 0 810 055
- WO-A-96/38256
- GB-A- 2 306 366

## Beschreibung

Die Erfindung betrifft ein Verfahren zum Verschließen von Rissen gemäß dem Oberbegriff des Anspruchs 1. Ein solches Verfharen ist aus GB-A-2306366 bekannt.

In verschiedenen Industrieanlagen oder Kraftwerken sind Anlagenteile aus Metall vorhanden, die sich betriebsbedingt bevorzugt unter Wasser befinden. Ein Beispiel dafür sind Kerneinbauten, z.B. der Kernmantel im Reaktordruckbehälter eines Kernkraftwerkes, der beim Betrieb des Kernkraftwerkes vom Reaktorwasser bedeckt ist. Es gibt auch in wassergefüllten Bekken Auskleidungen aus Metall.

Zum Sanieren unter Wasser befindlicher Bauteile wurden bereits Schweißverfahren eingesetzt. Diese Schweißverfahren erforderten aber, daß die zu verschweißende Stelle zuvor trokkengelegt wird. Sowohl das Verbinden von zwei metallischen Teilen an einem Kernmantel oder an einer Beckenauskleidung, als auch das Verschließen eines Risses war bisher nur möglich, wenn am Schweißort kein Wasser vorhanden war. Daher wurde bisher der Wasserspiegel bis unter den späteren Schweißort abgesenkt. In einem Reaktordruckbehälter eines Kernkraftwerks war dann wegen der hohen Kontamination der trockengelegten Teile ein sofortiges Arbeiten nicht möglich. Vielmehr mußte zunächst in aufwendiger Weise eine Dekontamination der zu verschweißenden Teile erfolgen. Es ist auch vorstellbar, daß die Teile aus dem Wasser herausgehoben werden, sofern notwendig dekontamiert und auf eine trockene Abstellposition gebracht werden, um sie dort zu bearbeiten.

Der Erfindung lag die Aufgabe zugrunde, ein Verfahren zum Verbinden metallischer Teile anzugeben, zu dessen Durchführung Wasser, das die Teile überdeckt, nicht entfernt werden muß.

Die Aufgabe wird gemäß der Erfindung mit einem Verfahren gemäß Anspruch 1 dadurch gelöst, daß, bevorzugt unter Wasser, mit dem Reib-Rühr-Schweißverfahren geschweißt wird.

Dieses als Rührreibschweißen oder Friction Stir Welding (FSW) für den Einsatz an trockenen Bauteilen bekannte Verfahren zeichnet sich dadurch aus, daß an der zu verschweißenden Stelle ein fester Dorn in Rotation versetzt wird, so daß das Metall durch die Reibungswärme plastisch verformbar wird und so zwei Teile verbindet oder einen Riß schließt.

Die Erkenntnis der Erfindung liegt darin, daß dieses Reib-Rühr-Schweißverfahren anders als ein Lichtbogen-Schweißverfahren unter Wasser einsetzbar ist. Damit wird der Vorteil erzielt, daß der Wasserspiegel nicht abgesenkt werden muß und auch nicht an der Schweißstelle eine dichte Haube, auf der das Wasser abgepumpt werden müßte, notwendig ist.

Da das Wasser nicht entfernt oder zurückgedrängt werden muß, wird mit dem Verfahren nach der Erfindung insbesondere der Vorteil erzielt, daß zwei Teile schnell und zuverlässig und auch kostengünstig miteinander verbunden werden können. Häufig ist ein Stillegen der Anlage, in der geschweißt werden soll, nicht erforderlich. Insbesondere entfällt bei Reaktordruckbehältern die aufwendige Dekontamination vor dem Schweißen.

Beispielsweise bilden die Teile, die verschweißt werden sollen, die Ränder eines Risses. Mit dem Reib-Rühr-Schweißverfahren wird der Riß verschlossen. Falls es sich um einen Riß handeln sollte, der durch interkristalline Spannungsrißkorrosion entstanden ist, wird vorteilhafterweise durch einen gegenüber üblichen Schweißverfahren mit Lichtbogen reduzierten Zugspannungseintrag eine stabile Verbindung geschaffen. Das ist darauf zurückzuführen, daß der Wärmeeintrag deutlich kleiner als bei bekannten Verfahren ist. Ebenso kann eine durch interkristalline Spannungsrißkorrosion geschädigte Schweißnahtwurzel, z.B. an einem Rohr, saniert werden.

Darüber hinaus wird im allgemeinen gegenüber üblichem Schweißen die Materialbeeinflussung durch Wärme deutlich vermindert. Das ist insbesondere darauf zurückzuführen, daß beispielsweise das Material der zu verschweißenden Teile beim Reib-Rühr-Schweißverfahren im zu verbindenden Bereich, bzw. an der Schweißstelle, nur plastisch verformbar und nicht flüssig gemacht wird, wozu vorteilhafterweise ein geringerer Wärmeeintrag als für eine Verflüssigung ausreichend ist.

Falls ein Riß zu verschließen ist, reicht es beispielsweise aus, daß dieser nur im Bereich der Oberfläche der angrenzenden Teile des Bauteiles, in dem sich der Riß befindet, verschlossen wird. Es ist vorteilhafterweise nicht erforderlich, den Riß bis zu seinem Grund hin durch Schweißen zu verschließen. Damit wird der Vorteil erzielt, daß der Riß bei gleicher Zuverlässigkeit schneller und kostengünstiger verschlossen wird.

Die Teile, die zu verbinden sind, bzw. an denen ein Riß zu verschließen ist, bestehen beispielsweise aus Stahl. Sie sind beispielsweise Bestandteile eines Kernmantels in einem Reaktordruckbehälter oder einer Beckenauskleidung oder sie sind Rohre. Bisher wurde das Reib-Rühr-Schweißverfahren nur an relativ weichen Metallen, wie z.B. Aluminium, eingesetzt. Ein Einsatz zum Verschweißen von Stahlteilen oder zum Beseitigen eines Risses in einem Stahlteil ist nach einer Ausgestaltung der Erfindung erst dadurch möglich, daß ein Schweißkopf verwendet wird, der aus einem Material besteht, das härter als Stahl ist. Ein solches Material kann z.B. Titan sein.

Das Verfahren nach der Erfindung kann insbesondere zum Längsschweißen und zum Konturenschweißen eingesetzt werden. Es können Kehlnähte aber auch Stumpfnähte gebildet werden.

Da unter Wasser mit dem Reib-Rühr-Schweißverfahren das Material der zu verschweißenden Teile, insbesondere beim Verschließen von Rissen, nur relativ wenig erhitzt wird, kann es auch nicht zu einer Korrosion in Folge des Schweißens kommen. Die geschweißten Teile sind also korrosionsbeständig.

Beispielsweise wird den Teilen am zu verbindenden Bereich ein Schutzgas zugeleitet. Dazu können dem Schweißkopf eine oder mehrere Schutzgasdüsen zugeordnet sein. Diese können ringförmig um den Schweißkopf verteilt sein. Durch das Schutzgas wird das Entstehen von Anlauffarben am geschweißten Material minimiert.

Mit dem Verfahren nach der Erfindung wird insbesondere der Vorteil erzielt, daß metallische Teile, insbesondere Kerneinbauten in Reaktordruckbehältern von Kernkraftwerken, unter Wasser saniert werden können. Es muß weder Wasser abgelassen werden, was ein aufwendiges Dekontaminieren nachsichziehen würde, noch muß die Schweißstelle mit einer aufwendigen dichten Haube überdeckt werden.

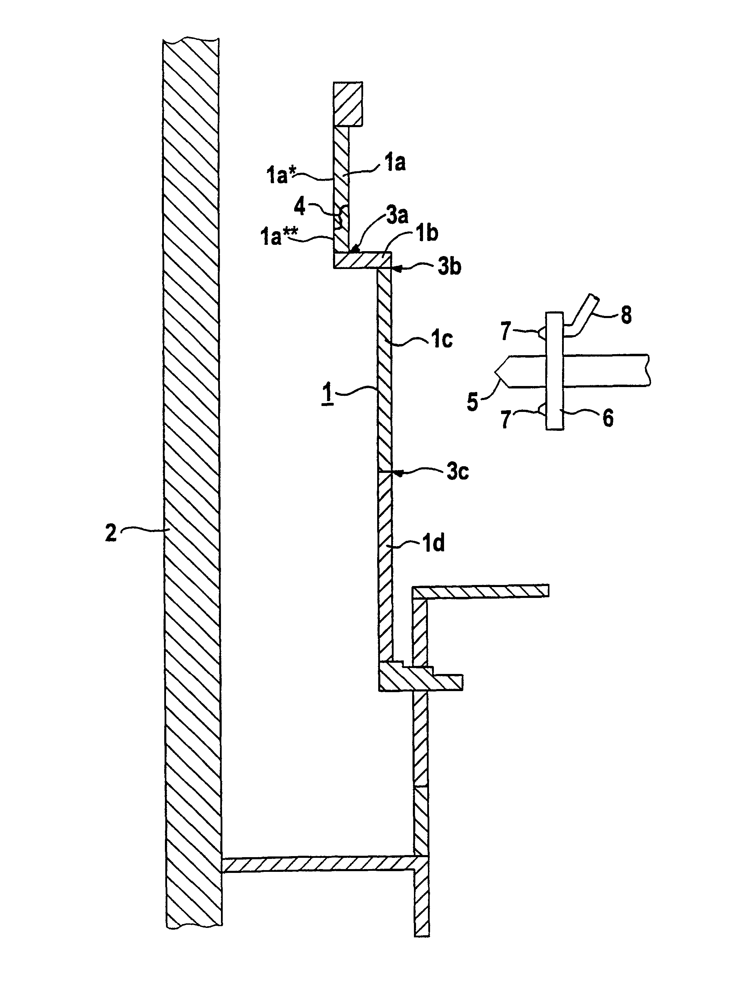

Ein Ort, wo das Verfahren zum Verbinden metallischer Teile nach der Erfindung besonders vorteilhaft eingesetzt werden kann, wird anhand der Zeichnung näher erläutert:

Die Zeichnung zeigt einen Ausschnitt eines Kernmantels 1 als Beispiel für ein Bauteil, an dem Schweißnähte 3a bis 3c anzubringen sind. Der Kernmantel 1 befindet sich innerhalb eines Reaktordruckbehälters 2, der mit Wasser gefüllt ist. Der Kernmantel 1 besteht aus mehreren Teilen 1a bis 1d, die durch Schweißnähte 3a bis 3c zusammengefügt sind. Bei einer Reparatur in einem Kernkraftwerk kann das Austauschen eines Teiles 1c des Kernmantels 1 erforderlich sein. Dazu wird ein neues Teil 1c durch Bilden der Schweißnähte 3b und 3c mit dem Reib-Rühr-Schweißverfahren unter Wasser befestigt. Mit dem gleichen Verfahren kann auch ein Riß 4, der zwei Teile la* und 1a** des Kernmantels 1 voneinander trennt, unter Wasser verschlossen werden. Es ist also mit einfachen Mitteln eine Sanierung des Kernmantels 1 möglich. Es muß weder Reaktorwasser abgelassen werden, was eine aufwendige Dekontamination nachsichziehen würde, noch muß eine dichte Haube, die das Schweißgerät umgibt und die zu behandelnde Bauteiloberfläche überdeckt, positioniert werden, was aufwendig wäre.

Um Schutzgas zur Schweißposition zu bringen, ist ein Schweißkopf 5 mit einem Leitungsring 6 umgeben, der in Richtung der Schweißposition ausgerichtete bzw. auf den Schweißkopf 5 hin gerichtete Düsen 7 für Schutzgas aufweist, das über eine Leitung 8 zugeführt wird. Das Schutzgas verdrängt das Wasser an der Schweißposition während des Schweißvorganges und minimiert das Entstehen von Anlauffarben am Kernmantel 1.

## Patentansprüche

1. Verfahren zum Verschließen eines Risses (4) in einem metallischen Teil (1a), wobei, bevorzugt unter Wasser, mit dem Reib-Rühr-Schweißverfahren geschweißt wird und das Material des Teiles (1a) am Riss (4) plastisch verformbar und nicht flüssig gemacht wird,
**dadurch gekennzeichnet , dass** der Riss (4) nur im Bereich der Oberfläche des Teiles (1a) verschlossen wird.

2. Verfahren nach Anspruch 1,
**dadurch gekennzeichnet, dass** das Teil (1a) aus Stahl besteht.

3. Verfahren nach einem der Ansprüche 1 oder 2,
**dadurch gekennzeichnet , dass** das Teil (1a) Bestandteil eines Kernmantels (1) oder einer Beckenauskleitung oder ein Rohr ist.

4. Verfahren nach einem der Ansprüche 1 bis 3,
**dadurch gekennzeichnet, dass** dem Teil (1a) am Riss (4) ein Schutzgas zugeleitet wird.

## Claims

1. Method of closing a crack (4) in a metallic part (1a), in which case welding takes place, preferably under water, by means of friction stir welding and the material of the part (1a) can be plastically deformed, and is not rendered liquid, at the crack (4), **characterized in that** the crack (4) is closed only in the region of the surface of the part (1a) .

2. Method according to Claim 1, **characterized in that** the part (1a) consists of steel.

3. Method according to either of Claims 1 and 2, **characterized in that** the part (1a) is a constituent part of a core shroud (1) or of a tank or reservoir lining or a pipe.

4. Method according to one of Claims 1 to 3, **characterized in that** an inert gas is supplied to the part (1a) at the crack (4).

## Revendications

1. Procédé de fermeture d'une fissure (4) dans une pièce (la) métallique, dans lequel on soude, de préférence sous l'eau par le procédé de soudage par friction-agitation et on rend le matériau de la pièce (1a), à la fissure (4), déformable plastiquement et non liquide
**caractérisé en ce que** l'on ferme la fissure (4) seulement dans la zone de la surface de la pièce (1a)

2. Procédé suivant la revendication 1, **caractérisé en ce que** la pièce (1a) est en acier.

3. Procédé suivant l'une des revendications 1 ou 2, **caractérisé en ce que** la pièce (1a) fait partie d'une enveloppe (1) de coeur ou d'un garnissage de bassin ou d'un tuyau.

4. Procédé suivant l'une des revendications 1 à 3, **caractérisé en ce que** l'on apporte à la pièce (1a) sur la fissure (4) un gaz de protection.
